# EUROPEAN PATENT APPLICATION

(11) **EP 4 776 419 A1**
(43) Date of publication of application: **15.07.2026**
(21) Application number: 24863302.6
(22) Date of filing: 20.03.2024
(51) Int. Cl.: H01M 50/503, H01M 50/521, H01M 50/507, H01M 50/204

(54) **BUS BAR AND BATTERY MODULE COMPRISING SAME**

(30) Priority: 07.09.2023 KR 20230119006
(71) Applicant: SK On Co., Ltd., Seoul 03161 (KR)
(72) Inventor: JANG, Sun Ho, Daejeon 34124 (KR)
(74) Representative: Stolmár & Partner Patentanwälte PartG mbB
(86) International application number: PCT/KR2024/095595
(87) International publication number: WO 2025/053723

(57) **Abstract**

A bus bar and a battery module are disclosed. According to one embodiment of the present disclosure, a bus bar comprises a front coupler; a bridge extending rearward from the front coupler; and a rear coupler extending rearward from the bridge. The bridge may comprise a front hump extending rearward from the front coupler and convex upward; a valley extending rearward from the front hump and convex downward; and a rear hump extending rearward from the valley, connected to the rear coupler, and convex upward.

## Description

### [Technical Field]

The present disclosure relates to a bus bar and a battery module including the bus bar.

### [Background Art]

A battery module may include a plurality of battery cells and a plurality of bus bars configured to electrically connect the plurality of battery cells. The bus bars may be coupled to two battery cells by welding.

In general, if there is a battery cell that needs to be replaced among the plurality of battery cells, the bus bar connected to the corresponding battery cell may be removed from the battery cell, and a new battery cell and a new bus bar may be installed. However, during the process of removing the bus bar welded to the battery cell, an excessive amount of cost and time may be consumed.

### [Summary of Invention]

### [Problems to be Solved by Invention]

According to an aspect of the present disclosure, it is an object to provide a bus bar that can be easily replaced and a battery module including the bus bar.

According to another aspect of the present disclosure, it is another object to provide a bus bar having a fuse function and a battery module including the bus bar.

### [Means for Solving Problems]

A bus bar according to one embodiment of the present disclosure may include: a front coupler; a bridge extending rearward from the front coupler; and a rear coupler extending rearward from the bridge, wherein the bridge may include: a front hump extending rearward from the front coupler and convex upward; a valley extending rearward from the front hump and convex downward; and a rear hump extending rearward from the valley, connected to the rear coupler and convex upward.

A battery module according to one embodiment of the present disclosure may include: a plurality of battery cells including a first battery cell and a second battery cell positioned behind the first battery cell; and a plurality of bus bars including a first bus bar connecting the first battery cell and the second battery cell, wherein the bus bar may include: a front coupler coupled to the first battery cell; a bridge extending rearward from the front coupler; and a rear coupler extending rearward from the bridge and coupled to the second battery cell, and the bridge may include: a front hump extending rearward from the front coupler and convex upward; a valley extending rearward from the front hump and convex downward; and a rear hump extending rearward from the valley, connected to the rear coupler and convex upward.

According to one embodiment of the present disclosure, there is provided a method for replacing a battery cell to be replaced, one of a plurality of battery cells arranged in a front-rear direction, with a replacement battery cell in a battery module including the plurality of battery cells and a plurality of bus bars that sequentially connect the plurality of battery cells, the method may include: separating a distal coupler from a bridge of a bus bar to be replaced that is connected to the battery cell to be replaced among the plurality of bus bars; removing the battery cell to be replaced and positioning the replacement battery cell in the position where the battery cell to be replaced was located; and connecting an adjacent battery cell that is disposed adjacent to the battery cell to be replaced with the battery cell to be replaced by means of a replacement bus bar, wherein each of the plurality of bus bars and the replacement bus bar may include: a front coupler; a bridge extending rearward from the front coupler; and a rear coupler extending rearward from the bridge, and the distal coupler may be the coupler coupled to the adjacent battery cell among the front coupler and the rear coupler.

### [Advantageous effects]

The bus bar and the battery module including the same according to one embodiment of the present disclosure may allow the bus bar to be easily replaced.

The bus bar according to one embodiment of the present disclosure may have a fuse function.

The bus bar and the battery module including the same according to one embodiment of the present disclosure may be widely applied in green technology fields, such as electric vehicles, battery charging stations, as well as solar power generation, wind power generation, and the like, which use the batteries.

The bus bar and the battery module including the same of the present disclosure may be used in eco-friendly electric vehicles, hybrid vehicles, and the like, which are aimed at mitigating climate change by reducing air pollution and greenhouse gas emissions.

### [Brief Description of Drawings]

FIG. 1 is a perspective view illustrating a battery module according to one embodiment of the present disclosure.
FIG. 2 is a perspective view illustrating a bus bar according to one embodiment of the present disclosure.
FIG. 3 is a cross-sectional view taken along line A1-A2 of the bus bar shown in FIG. 2.
FIG. 4 is a plan view of the bus bar shown in FIG. 3.
FIG. 5 is a plan view of a battery module with the bus bar coupled to the battery cell shown in FIG. 1.
FIG. 6 is a cross-sectional view taken along line B1-B2 of the battery module shown in FIG. 5.
FIG. 7 is an enlarged view of region C of the battery module shown in FIG. 6.
FIG. 8 is a view illustrating a state in which a portion of the first bus bar and the first battery cell shown in FIG. 7 are removed.
FIG. 9 is a cross-sectional view illustrating a state in which a new battery cell and a new bus bar are connected to another portion of the first bus bar shown in FIG. 8.

### [Mode for Carrying out Invention]

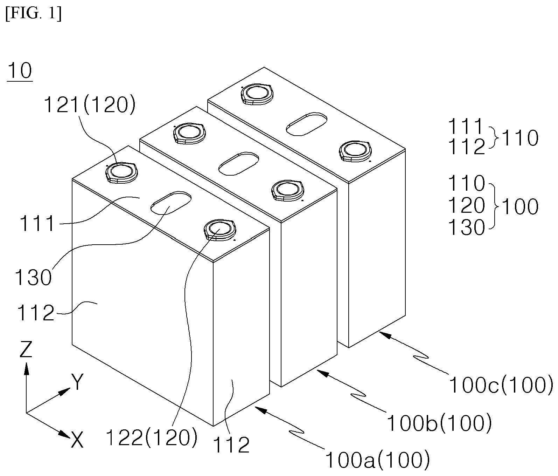

Hereinafter, embodiments of the present disclosure will be described in detail with reference to FIGS. 1 to 9. However, these embodiments are merely illustrative, and the present disclosure is not limited to the specific embodiments described as examples.

The battery module of the present disclosure may be applied to a pouch cell, a cylindrical cell, or a prismatic cell. The electrode assembly (not shown) may be of a winding type, a stacking type, a zigzag-folding type, or a stack-folding type.

FIG. 1 is a perspective view illustrating a battery module according to one embodiment of the present disclosure. For convenience of description, a case and a bus bar of a battery module 10 are omitted in FIG. 1.

Referring to FIG. 1, the battery module 10 may include a battery cell 100. A plurality of battery cells 100 may be provided. For example, the battery module 10 may include a plurality of battery cells 100.

The plurality of battery cells 100 may be arranged in one direction. For example, the plurality of battery cells 100 may be arranged in a front-back direction. The front-back direction may be the Y-axis direction or may be parallel to the Y-axis direction.

For example, the plurality of battery cells 100 may include a first battery cell 100a, a second battery cell 100b, and a third battery cell 100c. The first battery cell 100a, the second battery cell 100b, and the third battery cell 100c may be arranged sequentially from front to back.

A thickness direction of the battery cell 100 may be parallel to the direction in which the plurality of battery cells 100 are arranged. For example, the thickness direction of the battery cell 100 may be the front-back direction. For example, the thickness direction of the battery cell 100 may be parallel to the Y-direction.

A longitudinal direction of the battery cell 100 may intersect the thickness direction of the battery cell 100. For example, the longitudinal direction of the battery cell 100 may be perpendicular to the thickness direction of the battery cell 100. For example, the longitudinal direction of the battery cell 100 may be a vertical direction. For example, the longitudinal direction of the battery cell 100 may be parallel to the Z-axis direction.

A width direction of the battery cell 100 may intersect the longitudinal direction and the thickness direction of the battery cell 100. The width direction of the battery cell 100 may be perpendicular to the longitudinal direction and the thickness direction of the battery cell 100. For example, the width direction of the battery cell 100 may be a left-right direction. For example, the width direction of the battery cell 100 may be parallel to the X-axis direction.

The battery cell 100 can be charged and discharged. For example, during a charging process, the electrical energy stored in the battery cell 100 may increase. For example, during a discharging process, the electrical energy stored in the battery cell 100 may decrease.

The battery cell 100 may include a cell case 110. The cell case 110 may accommodate an electrode assembly (not shown). The cell case 110 may form an exterior of the battery cell 100. The cell case 110 may be sealed. When the cell case 110 is sealed, the electrode assembly (not shown) may be isolated from the outside of the cell case 110.

The cell case 110 may provide or maintain rigidity. For example, the cell case 110 may protect the electrode assembly (not shown) from external impacts or the like. The cell case 110 may be formed of a material including metal.

The cell case 110 may include a cell top 111. The cell top 111 may form an upper face of the battery module 10. For example, the cell top 111 may form the upper face of the cell case 110. The cell top 111 may have an overall plate shape.

The cell case 110 may include a cell side 112. The cell side 112 may be connected or coupled to the cell top 111. For example, the cell side 112 may have a shape extending downward from a perimeter of the cell top 111. For example, an upper end of the cell side 112 may be connected or coupled to the perimeter of the cell top 111.

The battery cell 100 may include an electrode terminal 120. For example, the electrode terminal 120 may be connected or coupled to the cell top 111. The electrode terminal 120 may form a portion of an upper face of the battery cell 100. The electrode terminal 120 may be exposed to the outside. For example, the electrode terminal 120 may be exposed upward from the battery cell 100.

The electrode terminal 120 may be connected to the electrode assembly (not shown). For example, the electrode terminal 120 may be electrically connected to the electrode assembly (not shown). The electrode terminal 120 may have a polarity. A plurality of electrode terminals 120 may be provided.

For example, the electrode terminal 120 may include a first electrode terminal 121 and a second electrode terminal 122. The first electrode terminal 121 may have a first polarity or form a first electric potential. The second electrode terminal 122 may have a second polarity or form a second electric potential.

The first polarity and the second polarity may be different from each other. For example, the first polarity may be positive, and the second polarity may be negative. The first potential and the second potential may be different from each other. For example, the "potential difference" may be a difference between the first potential and the second potential. For example, the potential difference between the first electrode terminal 121 and the second electrode terminal 122 may correspond to a voltage of the battery cell 100.

The first electrode terminal 121 and the second electrode terminal 122 may be disposed spaced apart from each other. For example, the first electrode terminal 121 and the second electrode terminal 122 may be arranged in the width direction of the battery cell 100. For example, the first electrode terminal 121 and the second electrode terminal 122 may be arranged in a direction parallel to the X-axis.

The battery cell 100 may include a vent plate 130. The vent plate 130 may be coupled to, connected to, or formed in the cell case 110. For example, the vent plate 130 may be coupled to, connected to, or formed in the cell top 111. For example, the vent plate 130 may be positioned in an opening formed in the cell top 111 and may close the opening formed in the cell top 111. For example, the vent plate 130 may be positioned between the first electrode terminal 121 and the second electrode terminal 122.

If a fire occurs or thermal runaway takes place in the battery cell 100, the internal pressure of the cell case 110 may increase. If the internal pressure of the cell case 110 becomes equal to or higher than a predetermined pressure, the vent plate 130 may rupture. When the vent plate 130 ruptures, gas or flame inside the cell case 110 may be discharged to the outside through the ruptured portion of the vent plate 130.

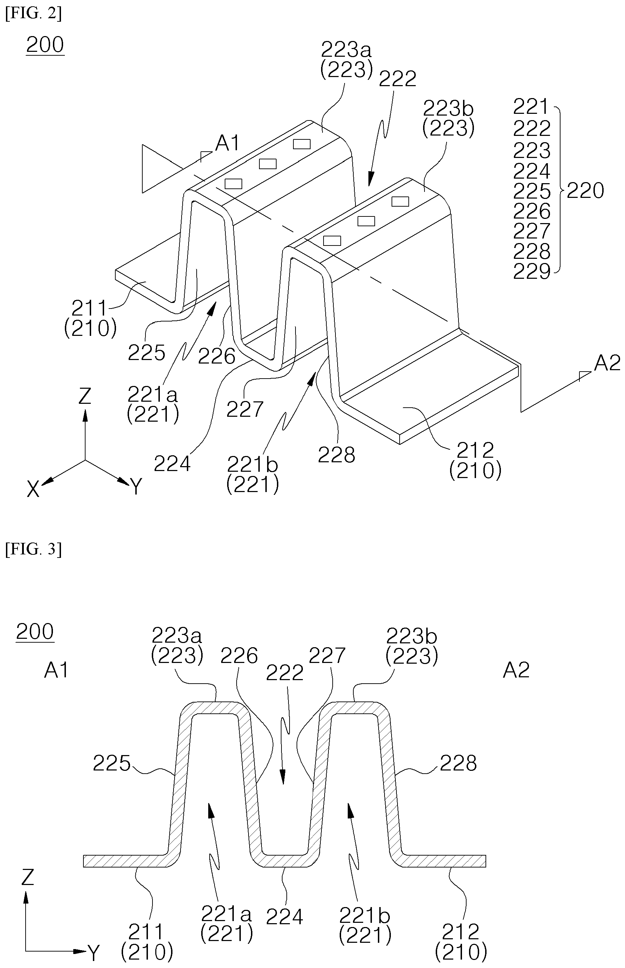

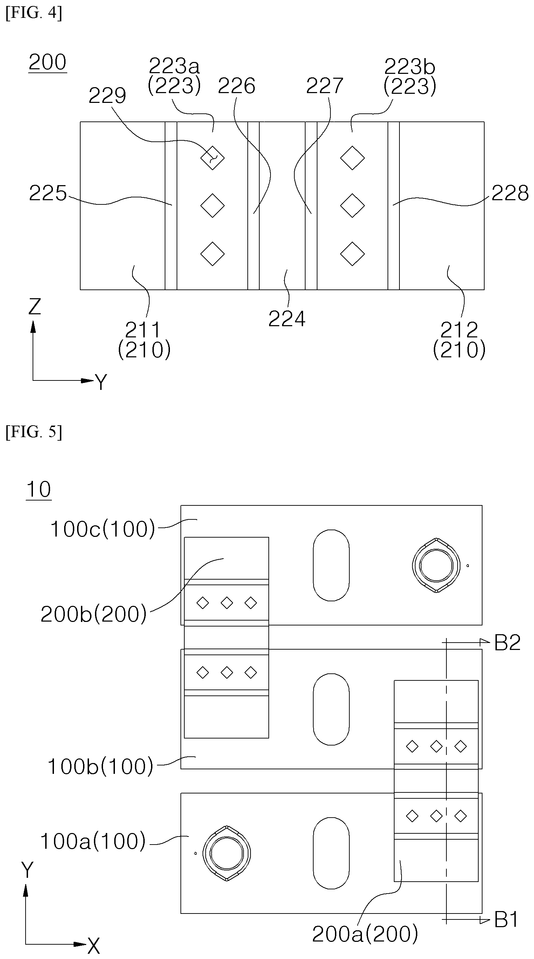

FIG. 2 is a perspective view illustrating a bus bar according to one embodiment of the present disclosure. FIG. 3 is a cross-sectional view taken along line A1-A2 of the bus bar shown in FIG. 2. FIG. 4 is a plan view of the bus bar shown in FIG. 3.

Referring to FIGS. 2 to 4, a bus bar 200 may electrically connect different battery cells 100 (see FIG. 1). For example, the bus bar 200 may connect two adjacent battery cells 100 (see FIG. 1).

The bus bar 200 may include a coupler 210. The coupler 210 may have a plate shape. The coupler 210 may be coupled to the electrode terminal 120 (see FIG. 1). For example, the coupler 210 may be welded to the electrode terminal 120 (see FIG. 1).

A plurality of couplers 210 may be provided. For example, the bus bar 200 may include a front coupler 211 and a rear coupler 212. The coupler 210 may include or refer to at least one of the front coupler 211 and the rear coupler 212.

The adjacent battery cells 100 (see FIG. 1) may include a front battery cell 100 (see FIG. 1) and a rear battery cell 100 (see FIG. 1). The bus bar 200 may be connected or coupled to the adjacent battery cells 100 (see FIG. 1). For example, the bus bar 200 may be connected or coupled to the first battery cell 100a (see FIG. 1) and the second battery cell 100b (see FIG. 1), respectively.

The front coupler 211 may be connected or coupled to the front battery cell 100 (see FIG. 1) between the adjacent battery cells 100 (see FIG. 1). For example, the front coupler 211 may be connected or coupled to the electrode terminal 120 (see FIG. 1) of the first battery cell 100a (see FIG. 1).

The rear coupler 212 may be connected or coupled to the rear battery cell 100 (see FIG. 1) between the adjacent battery cells 100 (see FIG. 1). For example, the rear coupler 211 may be connected or coupled to the electrode terminal 120 (see FIG. 1) of the second battery cell 100b (see FIG. 1).

The bus bar 200 may include a bridge 220. The bridge 220 may connect the front coupler 211 and the rear coupler 212. For example, the bridge 220 may extend rearward from the front coupler 211 to the rear coupler 212.

The front coupler 211, the bridge 220, and the rear coupler 212 may be formed integrally. For example, the front coupler 211, the bridge 220, and the rear coupler 212 may be formed by pressing a single metal plate.

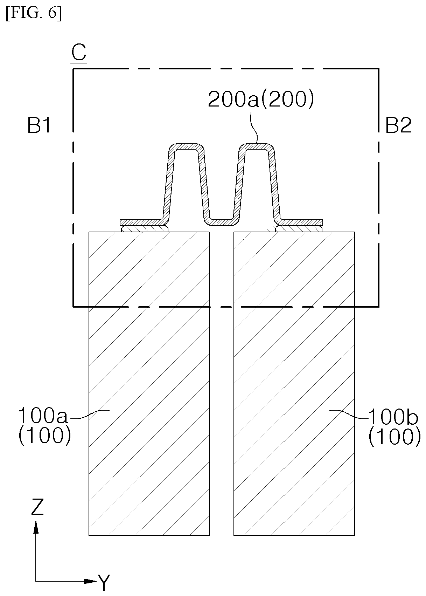

For example, the bus bar 200 may have two faces. For example, one face and the other face of the bus bar 200 may be formed opposite each other. For example, one face of the bus bar 200 may face and contact the battery cell 100 (see FIG. 6).

The bridge 220 may be elastic. For example, the bridge 220 may have a corrugated shape. For example, the bridge 220 may have a corrugated plate shape. For example, the bridge 220 may be convex or concave in the vertical direction. The convex or concave shape of the bridge 220 may be defined based on the upward direction.

The bridge 220 may include, for example, a hump 221. The hump 221 may be convex upward. The hump 221 may be concave downward. The hump 221 may be connected to the coupler 210. For example, the hump 221 may extend from the coupler 210.

A plurality of humps 221 may be provided. For example, the bridge 220 may include a front hump 221a and a rear hump 221b. The hump 221 may include or refer to at least one of the front hump 221a and the rear hump 221b.

The front hump 221a may be connected to the front coupler 211. For example, the front hump 221a may extend from the front coupler 211. The front hump 221a may be positioned behind the front coupler 211.

The rear hump 221b may be connected to the rear coupler 212. For example, the rear hump 221b may extend from the rear coupler 212. The rear hump 221b may be positioned in front of the rear coupler 212.

The bridge 220 may include a valley 222. The valley 222 may be concave upward. The valley 222 may be convex downward. The valley 222 may be connected to the humps 221. For example, the valley 222 may be positioned between the front hump 221a and the rear hump 221b. For example, the valley 222 may extend rearward from the front hump 221a to the rear hump 221b.

The bridge 220 may include a bridge top 223. The bridge top 223 may be formed on the hump 221. The bridge top 223 may be a portion of the hump 221. The bridge top 223 may face or be directed upward.

The bridge 220 may include a plurality of bridge tops 223. For example, the bridge 220 may include a front bridge top 223a and a rear bridge top 223b. The bridge top 223 may include or refer to at least one of the front bridge top 223a and the rear bridge top 223b. The front bridge top 223a may be formed on the front hump 221a. The rear bridge top 223b may be formed on the rear hump 221b.

The bridge 220 may include a bridge bottom 224. The bridge bottom 224 may be formed on the valley 222. The bridge bottom 224 may face or be directed downward.

The bridge 220 may include bridge segments 225, 226, 227 and 228. A plurality of bridge segments 225, 226, 227 and 228 may be provided. For example, the bridge 220 may include a first bridge segment 225, a second bridge segment 226, a third bridge segment 227, and a fourth bridge segment 228. The bridge segments 225, 226, 227 and 228 may include or refer to at least one of the first bridge segment 225, the second bridge segment 226, the third bridge segment 227, and the fourth bridge segment 228.

The first bridge segment 225 may be bent and extend upward from the front coupler 211. The front bridge top 223a may extend rearward from an upper end of the first bridge segment 225.

The second bridge segment 226 may be bent and extend downward from a rear end of the front bridge top 223a. The bridge bottom 224 may extend rearward from a lower end of the second bridge segment 226.

The third bridge segment 227 may be bent and extend upward from a rear end of the bridge bottom 224. The rear bridge top 223b may extend rearward from an upper end of the third bridge segment 227.

The fourth bridge segment 228 may be bent and extend downward from a rear end of the rear bridge top 223b. A lower end of the fourth bridge segment 228 may be connected to a front end of the rear coupler 212.

The front hump 221a may be formed by the first bridge segment 225, the second bridge segment 226, and the front bridge top 223a. For example, the front hump 221a may be formed by at least a portion of the first bridge segment 225, at least a portion of the second bridge segment 226, and the front bridge top 223a.

The rear hump 221b may be formed by the third bridge segment 227, the fourth bridge segment 228, and the rear bridge top 223b. For example, the rear hump 221b may be formed by at least a portion of the third bridge segment 227, at least a portion of the fourth bridge segment 228, and the rear bridge top 223b.

The valley 222 may be formed by the second bridge segment 226, the third bridge segment 227, and the bridge bottom 224. For example, the valley 222 may be formed by at least a portion of the second bridge segment 226, at least a portion of the third bridge segment 227, and the bridge bottom 224.

The bridge 220 may include a bridge opening 229. The bridge opening 229 may be an opening formed in a plate forming the bridge 220. For example, the bridge opening 229 may be formed in the bridge top 223.

The bridge opening 229 may be an opening that penetrates the bridge 220. For example, the bridge opening 229 may extend through the bridge 220 from one face to the other face.

For another example, the bridge opening 229 may be formed as a groove on at least one of one face and the other face of the bridge 220. In this case, the bridge opening 229 may be referred to as a "bridge groove."

For example, the bridge opening 229 may be formed in the bridge bottom 224. For example, the bridge opening 229 may be formed in the bridge segments 225, 226, 227 and 228.

For example, the bridge opening 229 may be formed at the bridge bottom 224 and the bridge segments 225, 226, 227 and 228. For example, the bridge opening 229 may be positioned at a boundary between the bridge bottom 224 and the second bridge segment 226. For example, the bridge opening 229 may be positioned at a boundary between the bridge bottom 224 and the third bridge segment 227.

For example, the bridge opening 229 may be formed at the bridge top 223 and the bridge segments 225, 226, 227 and 228. For example, for example, the bridge opening 229 may be positioned at a boundary between the front bridge top 223a and the first bridge segment 225. For example, for example, the bridge opening 229 may be positioned at a boundary between the front bridge top 223a and the second bridge segment 226. For example, for example, the bridge opening 229 may be positioned at a boundary between the rear bridge top 223b and the third bridge segment 227. For example, for example, the bridge opening 229 may be positioned at a boundary between the rear bridge top 223b and the fourth bridge segment 228.

When the bridge opening 229 is positioned at a boundary between the bridge 220 and the coupler 210, the separation of the bridge 220 and the coupler 210 may be facilitated. In this case, replacement of the bus bar 200 may be easier.

Current may flow or be generated in the bus bar 200. When a current flows through or is generated in the bus bar 200, the bus bar 200 may be heated by ohmic heating due to the electric resistance of the bus bar 200.

For example, a current may flow from the front coupler 211 to the rear coupler 212. If the current flowing through or generated in the bus bar 200 exceeds a predetermined level, the battery module 10 (see FIG. 1) may malfunction. The bridge opening 229 may prevent the current flowing through or generated in the bus bar 200 from exceeding the predetermined level.

For example, the bus bar 200 may perform a fuse function. The current density in a portion of the bridge 220 adjacent to the bridge opening 229 may be relatively high. Accordingly, if a current exceeding a predetermined level flows through or is generated in the bus bar 200, the bridge 220 may rupture due to heat generated in the portion adjacent to the bridge opening 229.

The bridge opening 229 may have various shapes. For example, as illustrated in the drawings, the bridge opening 229 may have a rhombus shape. For example, the bridge opening 229 may have at least one shape selected from a polygon, a circle, and an ellipse.

A width of the bridge opening 229 may vary along a longitudinal direction of the bus bar 200. For example, the width of the bridge opening 229 may vary along the front-back direction. For example, the width of the bridge opening 229 may increase toward the rear and then decrease again.

A plurality of bridge openings 229 may be provided. For example, the plurality of bridge openings 229 may be arranged along a width direction of the bridge 220. For example, the plurality of bridge openings 229 may be formed in the bridge top 223 and disposed spaced apart from each other in the width direction of the bridge 200. The width direction of the bridge 220 may be, for example, the left-right direction.

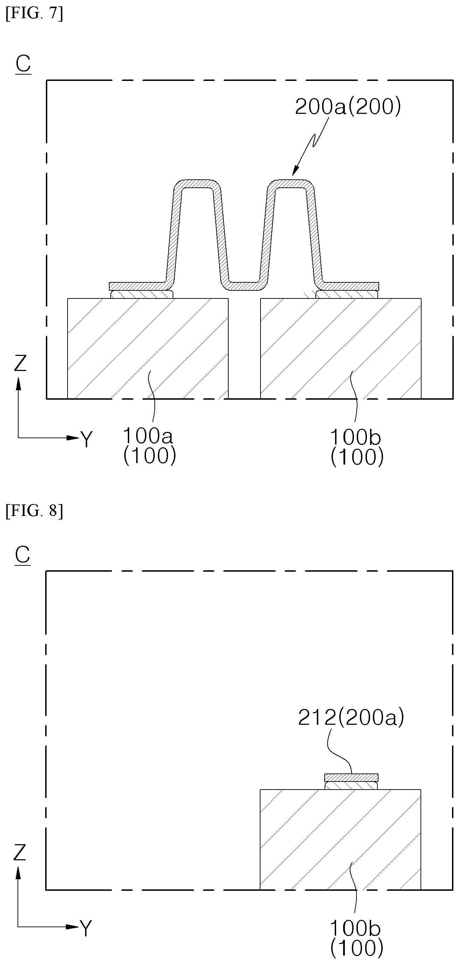

FIG. 5 is a plan view of a battery module with the bus bar coupled to the battery cell shown in FIG. 1. FIG. 6 is a cross-sectional view taken along line B1-B2 of the battery module shown in FIG. 5. FIG. 7 is an enlarged view of region C of the battery module shown in FIG. 6.

Referring to FIGS. 5 to 7, the adjacent battery cells 100 may be connected to each other by the bus bar 200. When the adjacent battery cells 100 are connected by the bus bar 200, the adjacent battery cells 100 may be electrically connected by the bus bar 200.

A plurality of bus bars 200 may be provided. For example, the battery module 10 may include a plurality of bus bars 200. For example, the battery module 10 may include a first bus bar 200a and a second bus bar 200b. The bus bar 200 may include or refer to at least one of the first bus bar 200a and the second bus bar 200b.

For example, the first bus bar 200a may connect the first battery cell 100a to the second battery cell 100b. For example, the second bus bar 200b may connect the second battery cell 100b to the third battery cell 100c. For example, the first battery cell 100a, the second battery cell 100b, and the third battery cell 100c may be electrically connected in series.

FIG. 8 is a view illustrating a state in which a portion of the first bus bar and the first battery cell shown in FIG. 7 are removed.

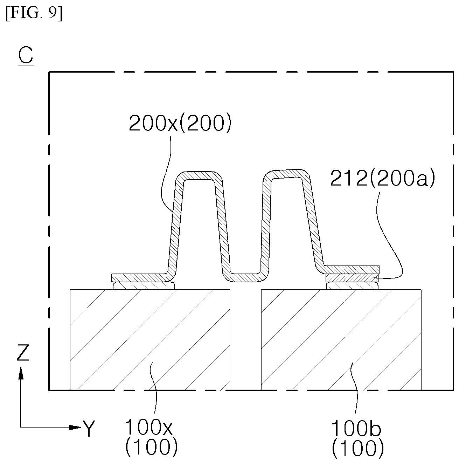

Referring to FIGS. 7 and 8, for example, the first battery cell 100a may need to be replaced with a new battery cell 100x (see FIG. 9). During the process of replacing the battery cell 100 with the new battery cell 100, a portion of the bus bar 200 welded to the battery cell 100 may be separated.

For example, the coupler 210 (see FIGS. 2 to 4) may be welded to the electrode terminal 120 (see FIG. 1). At the boundary between bridge 220 (see FIGS. 2 to 4) and coupler 210 (see FIGS. 2 to 4), the bus bar 200 may be cut.

For example, the first battery cell 100a, the front coupler 211 of the first bus bar 200a (see FIGS. 2 to 4), and the bridge 200 of the first bus bar 200a (see FIGS. 2 to 4) may be removed from the battery module 10 (see FIG. 5). At least a portion of the rear coupler 212 of the first bus bar 200a (see FIGS. 2 to 4) may remain connected to the second battery cell 100b.

FIG. 9 is a cross-sectional view illustrating a state in which a new battery cell and a new bus bar are connected to another portion of the first bus bar shown in FIG. 8.

Referring to FIGS. 7 to 9, the first battery cell 100a may be replaced with a new battery cell. For example, the connection between the first battery cell 100a and the second battery cell 100b may be released, and the replacement battery cell 100x may be connected to the second battery cell 100b.

A portion of the first bus bar 200a connected to the first battery cell 100a may be removed. A portion of the first bus bar 200a connected to the second battery cell 100b may be connected to the replacement bus bar 200x.

For example, the replacement bus bar 200x may connect the replacement battery cell 100x to the second battery cell 100b. For example, the front coupler 211 (see FIGS. 2 to 4) of the replacement bus bar 200x may be connected to the electrode terminal 120 (see FIG. 1) of the replacement battery cell 100x. For example, the rear coupler 212 (see FIGS. 2 to 4) of the replacement bus bar 200x may be connected to the rear coupler 212 of the first bus bar 200a.

The height of the front coupler 211 of the replacement bus bar 200x (see FIGS. 2 to 4) may be lower than that of the rear coupler 212 of the replacement bus bar 200x (see FIGS. 2 to 4). For example, a difference between the height of the front coupler 211 of the replacement bus bar 200x (see FIGS. 2 to 4) and the height of the rear coupler 212 of the replacement bus bar 200x (see FIGS. 2 to 4) may correspond to a thickness of the rear coupler 212 of the first bus bar 200a. The thickness of the rear coupler 212 may be measured in the vertical direction.

Even if the heights of the front coupler 211 (see FIGS. 2 to 4) and the rear coupler 212 (see FIGS. 2 to 4) of the replacement bus bar 200x are different, the replacement bus bar 200x may stably connect the replacement battery cell 100x to the second battery cell 100b due to the elasticity of the bridge 220 (see FIGS. 2 to 4). The replacement bus bar 200x may be connected to the second battery cell 100b through the rear coupler 212 of the first bus bar 200a.

Referring to FIGS. 1 to 9, when replacing the battery cell 100, the battery cell 100 may be easily replaced and connected to another battery cell 100 by cutting only one side of the bus bar 200 connected to the battery cell 100 to be replaced, without cutting both sides. Accordingly, the replacement process of the battery cell 100 may be improved.

The bus bar 200 may have an overall plate shape. For example, the bus bar 200 may have an upper face and a lower face. The space between the upper and lower faces of the bus bar 200 may define a thickness of the bus bar 200.

The upper face of the bus bar 200 may face or be directed upward. The lower face of the bus bar 200 may face or be directed downward. For example, the lower face of the coupler 210 may face or contact the electrode terminal 120. For example, the lower face of the coupler 210 may be coupled or connected to the electrode terminal 120. For example, the lower face of the rear coupler 212 of the replacement bus bar 200x may be coupled or connected to the rear coupler 212 of the first bus bar 200a.

The bus bar 200 may be formed by bending a metal plate. For example, the bus bar 200 may be formed by press-forming a metal plate. The bus bar 200 may be formed integrally, for example.

Referring to FIGS. 1 to 9, a method for replacing the bus bar 200 may be considered. For example, if the first bus bar 200a shown in FIG. 5 is determined to be defective, the first bus bar 200a may need to be replaced with a replacement bus bar 200x. Since the first bus bar 200a is the bus bar 200 that needs to be replaced, the first bus bar 200a may be referred to as a "bus bar to be replaced."

The method for replacing the bus bar 200 may include a step of separating the coupler 210 from the bridge 220 of a bus bar 200a to be replaced. In this step, the front coupler 211 and the rear coupler 212 of the bus bar 200a to be replaced may each be separated from the bridge 220 of the bus bar 200a to be replaced.

The method for replacing the bus bar 200 may include a step of coupling the replacement bus bar 200x to the coupler 210 of the bus bar 200a to be replaced. In this step, the front coupler 211 of the replacement bus bar 200x may be coupled to the front coupler 211 of the bus bar 200a to be replaced, and the rear coupler 212 of the replacement bus bar 200x may be coupled to the rear coupler 212 of the bus bar 200a to be replaced.

Referring to FIGS. 1 to 9, a method for replacing the battery cell 100 may be considered. The method for replacing the battery cell 100 may be referred to as a "battery cell replacement method."

For example, if the first battery cell 100a shown in FIG. 5 is determined to be defective, the first battery cell 100a may need to be replaced with a replacement battery cell 100x. Since the first battery cell 100a is the battery cell 100 that needs to be replaced, the first battery cell 100a may be referred to as a "battery cell to be replaced."

The method for replacing the battery cell 100 may include a step of separating the distal coupler 212 from the bridge 220 of the bus bar 200a coupled to the battery cell 100a to be replaced.

For example, if the battery cell 100a to be replaced is the first battery cell 100a, the front coupler 211 of the bus bar 200a coupled to the battery cell 100a to be replaced may be referred to as a "proximal bus bar" in that it is coupled to the battery cell 100a to be replaced, and the rear coupler 212 of the bus bar 200a coupled to the battery cell 100a to be replaced may be referred to as a "distal bus bar" in that it is coupled to the battery cell 100b adjacent to the battery cell 100a to be replaced.

The method for replacing the battery cell 100 may include a step of removing the battery cell 100a to be replaced and positioning the replacement battery cell 100x in the position where the battery cell 100a to be replaced was located.

The method for replacing the battery cell 100 may include a step of connecting the battery cell 100b adjacent to the replacement battery cell 100x and the replacement battery cell 100x with the replacement bus bar 200x. In this step, one of the couplers 210 of the replacement bus bar 200x may be coupled to the replacement battery cell 100x, and the other coupler 210 of the replacement bus bar 200x may be coupled to a coupler of the bus bar 200a to be replaced that is connected to the battery cell 100b adjacent to the replacement battery cell 100x.

The contents described above are merely examples of applying the principles of the present disclosure, and other configurations may be further included without departing from the scope of the present disclosure.

## Claims

1. A bus bar comprising:
a front coupler;
a bridge extending rearward from the front coupler; and
a rear coupler extending rearward from the bridge,
wherein the bridge comprises:
a front hump extending rearward from the front coupler and convex upward;
a valley extending rearward from the front hump and convex downward; and
a rear hump extending rearward from the valley, connected to the rear coupler and convex upward.

2. The bus bar according to claim 1, wherein the bridge is elastic.

3. The bus bar according to claim 1, wherein the bridge comprises a bridge opening formed in at least one of the front hump, the valley, and the rear hump.

4. The bus bar according to claim 1, wherein the bridge comprises:
a first bridge segment extending upward from a rear end of the front coupler;
a front bridge top extending rearward from an upper end of the first bridge segment;
a second bridge segment extending downward from a rear end of the front bridge top;
a bridge bottom extending rearward from a lower end of the second bridge segment;
a third bridge segment extending upward from a rear end of the bridge bottom;
a rear bridge top extending rearward from an upper end of the third bridge segment; and
a fourth bridge segment extending downward from a rear end of the rear bridge top to a front end of the rear coupler.

5. The bus bar according to claim 4, wherein the first bridge segment, the front bridge top, and the second bridge segment together form the front hump.

6. The bus bar according to claim 4, wherein the second bridge segment, the bridge bottom, and the third bridge segment together form the valley.

7. The bus bar according to claim 4, wherein the third bridge segment, the rear bridge top, and the fourth bridge segment together form the rear hump.

8. The bus bar according to claim 1, wherein the front hump and the rear hump are concave downward, and
the valley is concave upward.

9. The bus bar according to claim 1, wherein the bridge comprises a plurality of bridge openings formed in at least one of the front hump, the valley, and the rear hump and disposed spaced apart from each other in a left-right direction.

10. The bus bar according to claim 1, wherein the bridge comprises a bridge opening formed at a boundary between the coupler and the bridge, and
the coupler comprises at least one of the front coupler and the rear coupler.

11. A battery module comprising:
a plurality of battery cells including a first battery cell and a second battery cell positioned behind the first battery cell; and
a plurality of bus bars including a first bus bar connecting the first battery cell and the second battery cell,
wherein the bus bar comprises:
a front coupler coupled to the first battery cell;
a bridge extending rearward from the front coupler; and
a rear coupler extending rearward from the bridge and coupled to the second battery cell,
wherein the bridge comprises:
a front hump extending rearward from the front coupler and convex upward;
a valley extending rearward from the front hump and convex downward; and
a rear hump extending rearward from the valley, connected to the rear coupler and convex upward.

12. The battery module according to claim 11, wherein the bridge comprises a bridge opening formed in at least one of the front hump, the valley, and the rear hump.

13. The battery module according to claim 11, wherein the bridge comprises:
a first bridge segment extending upward from a rear end of the front coupler;
a front bridge top extending rearward from an upper end of the first bridge segment;
a second bridge segment extending downward from a rear end of the front bridge top;
a bridge bottom extending rearward from a lower end of the second bridge segment;
a third bridge segment extending upward from a rear end of the bridge bottom;
a rear bridge top extending rearward from an upper end of the third bridge segment; and
a fourth bridge segment extending downward from a rear end of the rear bridge top to a front end of the rear coupler.

14. The battery module according to claim 13, wherein the first bridge segment, the front bridge top, and the second bridge segment together form the front hump.

15. The battery module according to claim 13, wherein the second bridge segment, the bridge bottom, and the third bridge segment together form the valley.

16. The battery module according to claim 13, wherein the third bridge segment, the rear bridge top, and the fourth bridge segment together form the rear hump.

17. The battery module according to claim 11, wherein the front hump and the rear hump are concave downward, and
the valley is concave upward.

18. The battery module according to claim 11, wherein the bridge comprises a bridge opening formed at a boundary between the coupler and the bridge, and
the coupler comprises at least one of the front coupler and the rear coupler.

19. A method for replacing a battery cell to be replaced, one of a plurality of battery cells arranged in a front-rear direction, with a replacement battery cell in a battery module comprising the plurality of battery cells and a plurality of bus bars that sequentially connect the plurality of battery cells, the method comprising:
separating a distal coupler from a bridge of a bus bar to be replaced that is connected to the battery cell to be replaced among the plurality of bus bars;
removing the battery cell to be replaced and positioning the replacement battery cell in the position where the battery cell to be replaced was located; and
connecting an adjacent battery cell that is disposed adjacent to the battery cell to be replaced with the battery cell to be replaced by means of a replacement bus bar,
wherein each of the plurality of bus bars and the replacement bus bar comprise:
a front coupler;
a bridge extending rearward from the front coupler; and
a rear coupler extending rearward from the bridge, and
wherein the distal coupler is the coupler coupled to the adjacent battery cell between the front coupler and the rear coupler.

20. The method according to claim 19, wherein the bridge comprises:
a front hump extending rearward from the front coupler and convex upward;
a valley extending rearward and convex downward; and
a rear hump extending rearward from the valley, connected to the rear coupler and convex upward.
